Europäisches Patentamt

European Patent Office

Office européen des brevets

(19)

(11) Publication number : **0 667 382 A1**

(12) **EUROPEAN PATENT APPLICATION**

(21) Application number : 95300756.4

(22) Date of filing : 08.02.95

(51) Int. Cl.$^6$ : **C09J 183/04,** C09J 7/00

A request for correction of the description and claims has been filed pursuant to Rule 88 EPC. A decision on the request will be taken during the proceedings before the Examining Division (Guidelines for Examination in the EPO, A-V, 3.).

(30) Priority : **09.02.94 US 193958**

(43) Date of publication of application :
**16.08.95 Bulletin 95/33**

(84) Designated Contracting States :
**DE FR GB NL**

(71) Applicant : **DOW CORNING CORPORATION**
**3901 S. Saginaw Road**
**Midland Michigan 48686-0994 (US)**

(72) Inventor : **Sweet, Randall Paul**
**2433 N. Waldo Road**
**Midland, Michigan (US)**
Inventor : **Ulman, Katherine Lynn**
**5540 Merry Court**
**Sanford, Michigan (US)**

(74) Representative : **Laredo, Jack Joseph et al**
**Elkington and Fife**
**Prospect House**
**8 Pembroke Road**
**Sevenoaks, Kent TN13 1XR (GB)**

(54) **Silicone pressure sensitive adhesive composition containing thermoplastic multi-segmented copolymer.**

(57) A pressure sensitive adhesive composition comprises a mixture of (A) a silicate resin, (B) a silicone fluid, and (C) a thermoplastic multi-segmented copolymer which is a product of the reaction between a diisocyanate and a reactive polyorganosiloxane having two groups reactive with isocyanate thereon. The thermoplastic multi-segmented copolymer comprises from 1 to 40 weight percent hard segments, derived from reactants selected from organic diisocyanates, organic diols and organic diamines, and from 60 to 99 weight percent soft segments, comprising from 15 to 99 weight percent, based on the weight of the thermoplastic multi-segmented copolymer, of polyorganosiloxane units, and from O to 70 weight percent, based on the weight of the thermoplastic multi-segmented copolymer, of polyalkylene oxide units.

EP 0 667 382 A1

The present invention relates to pressure sensitive adhesive compositions containing thermoplastic multi-segmented copolymers.

A pressure sensitive adhesive (PSA), generally, is a material which adheres to a surface with slight pressure and which can release from the surface with negligible transfer of material to the surface. Silicone PSAs are preferred over other types in many applications, especially in the medical area. For example, silicone PSAs are acceptable for topical use and have use in transdermal drug delivery applications which involve the adherence and sealing of a drug-containing patch to a patient's skin.

However, many current silicone PSAs experience a degree of "cold flow"; that is, flowing or softening at temperatures near room temperature. The amount of cold flow is increased when the silicone PSA is in contact with a patient's skin, as the higher temperature of a patient's skin causes a further softening of the silicone PSA. Flowing or softening of the silicone PSA may cause shifting of the adhesive on the drug-containing patch during storage or use, which can decrease the efficacy of the drug-containing patch. There is, therefore, a need for a silicone PSA having a reduced propensity for cold flow.

Other desirable attributes of a PSA include the biocompatibility of the adhesive to animal skin and the capability of (a) making it hot-meltable, (b) modifying its properties, such as drug permeability, solubility, adhesiveness, releasability and tackiness; and (c) making it either transparent or white, thereby resulting in an aesthetically-pleasing product.

To achieve the foregoing attributes and advantages, our invention is a pressure sensitive adhesive composition, comprising a mixture of a silicate resin, a silicone fluid and a thermoplastic multi-segmented (block) copolymer which is a product of the reaction between a diisocyanate and a reactive polyorganosiloxane having two groups reactive with isocyanate. This PSA composition exhibits tackiness and produces adhesiveness upon applying slight pressure thereto.

The silicate resin and silicone fluid are from 75 to 99 weight percent of the composition, and the thermoplastic multi-segmented copolymer is from 1 to 25 weight percent of the composition. Preferably, the silicate resin and the silicone fluid are from 90 to 99 weight percent and the thermoplastic multi-segmented copolymer is from 1 to 10 weight percent of the composition.

The silicate resin and silicone fluid are employed in a weight ratio of from 40:60 to 70:30 silicate resin to silicone fluid. It is preferred that the weight ratio be from 50:50 to 60:40 silicate resin to silicone fluid.

One suitable silicate resin contains a trimethylsilyl-endblocked polysilicate resin consisting of a benzene-soluble resinous copolymer containing silicon-bonded hydroxyl radicals, and consisting essentially of triorganosiloxy units of the formula $R_3SiO_{1/2}$ and tetrafunctionalsiloxy units of the formula $SiO_{4/2}$, in a ratio of 0.6 to 0.9 triorganosiloxy units for each tetrafunctionalsiloxy unit present in the copolymer, wherein each R is a monovalent organic radical independently selected from hydrocarbon radicals of 1 to 6 carbon atoms. This silicate resin may be blended with a silanol-endstopped polydiorganosiloxane fluid, e.g., a polydimethylsiloxane fluid, which combination is disclosed in US-A 2,736,721 and US-A 2,814,601.

Another suitable silicate resin and silicone fluid combination useful in our invention is disclosed in US-A 2,857,356. The latter patent teaches compositions which consist of a mixture of (i) a cohydrolysis product of a trialkyl hydrolyzable silane and alkyl silicate, wherein the cohydrolysis product contains a plurality of silicon-bonded hydroxy groups, and (ii) a linear, high viscosity organopolysiloxane fluid containing silicon-bonded hydroxy groups.

The silicate resin and the silicone fluid may optionally be condensed together according to CA-A 711,756. In such a condensation reaction, the silicate resin and silicone fluid are mixed together in the presence of a catalytic amount of a silanol condensation catalyst. Then, they are condensed, for example, by heating under reflux conditions for 1 to 20 hours. Examples of silanol condensation catalysts are primary, secondary and tertiary amines, carboxylic acids of these amines and quaternary ammonium salts.

Other silicate resin and silicone fluid combinations which are suitable for use in the present invention are those compositions described in US-As 4,591,622, 4,584,355, 4,585,836 and 4,655,767. Generally, these compositions consist of a blend of a silicate resin and a silicone fluid which are chemically treated to reduce the silicon-bonded hydroxyl content of the blend. These compositions may optionally be condensed as described above prior to the chemical treatment.

To form our PSA composition, the silicate resin and silicone fluid are blended with a thermoplastic multi-segmented (block) copolymer which is the product of the reaction between a diisocyanate and a reactive polyorganosiloxane having two groups thereon which are reactive with isocyanate. This copolymer comprises from 1 to 40 weight percent "hard" segments consisting essentially of units derived from an organic diisocyanate and, if desired, a difunctional chain extender, and from 60 to 99 weight percent "soft" segments comprising from 15 to 99 weight percent, based on the weight of the thermoplastic copolymer, of a hydrophobic portion consisting essentially of one or more polyorganosiloxane units, and from O to 70 weight percent, based on the weight of the thermoplastic copolymer, of a hydrophilic portion consisting essentially of at least one polyalkylene oxide unit, preferably polyethylene oxide. The polyorganosiloxane units consist essentially of at least one sequence of from 10 to 300 organosiloxane units. If present, the hydrophilic soft portion of the soft segment consists essentially of at least one sequence per thermoplastic copolymer molecule of from 5 to 75 alkylene oxide units. Preferably, the hard segments are present in an amount of from 3 to 25 weight percent and the soft segments are present in an amount of from 75 to 97 weight percent, based on the weight of the thermoplastic copolymer. It is also preferred that the molar ratio of hard segments to soft segments be from 1:1 to 5:1.

The molecules of the thermoplastic copolymer contain at least one segment of a "hard" polymer and at least one segment of a "soft" polymer. It is understood in the art that the terms "hard" and "soft" as applied to the segments of the thermoplastic copolymer refer to the relative glass-transition temperatures (Tg) of the segments.

The hard segment has a substantially higher Tg than the soft segment.

Preferably, the thermoplastic copolymer also has a number average molecular weight of from 30,000 to 120,000.

Suitable diisocyanates used to prepare our thermoplastic copolymer may be any of the available aliphatic (including cycloaliphatic) or aromatic diisocyanates. Examples include 1,5-naphthalene diisocyanate; p-phenylene diisocyanate; tolylene diisocyanate; 3,3'-dimethyl-4,4'-biphenyl diisocyanate; 4,4'-methylene diisocyanate; p-xylene diisocyanate; m-trimethyl-xylylene diisocyanate; trans-1,4-cyclohexylene diisocyanate; hexamethylene diisocyanate; trimethyl hexamethylene diisocyanate; hydrogenated methylene diisocyanate; 4,4'-diphenyl methane diisocyanate; 4,4'dicyclohexylmethyl diisocyanate and isophorene diisocyanate. Preferred diisocyanates are 4,4'-methylene diisocyanate and hydrogenated methylene diisocyanate.

Suitable difunctional chain extenders which may be used to prepare a proportion of the hard segments of our thermoplastic copolymer may be any low molecular weight diols or diamines. Examples include aliphatic (including cycloaliphatic) and aromatic diols or diamines having from 2 to 20 carbon atoms. Examples of such diols and diamines include 1,4-butanediol; 1,3-butanediol; 1,6-hexamethylenediol; 2,2-dimethyl-1,3-propanediol; 1,4-cyclohexanedimethylol; hydroquinone di- (B hydroxide ethyl ether); 1,1'-isopropylidine-bis-(p-phenylene-oxy)-di-2-ethanol; poly(tetramethylene ether)-glycol; ethylene glycol; 1,2-diaminoethane; 1,4-diaminobutane; 1,2-propanediamine; hexamethylenediamine; diethylene diamine; 5-amino-1-(amino methyl)-1,3,3-trimethyl cyclohexane; 4,4'-methylene bis(cyclohexylamine) and ethanolamine. Diols having from 2 to 4 carbon atoms are preferred, in view of the availability and environmental compatibility of these compounds.

The reactive polyorganosiloxanes useful in preparing the thermoplastic copolymers used in the present invention are those having two (preferably, no more and no less than two) terminal groups reactive with isocyanates. Examples include amino-functional, carbinol-functional, mercapto-functional and epoxy-functional groups.

This reactive polyorganosiloxane preferably has from 10 to 300 repeating diorganosiloxy units, optionally, with some triorganosiloxy and/or monoorganosiloxy units. The reactive polyorganosiloxane may be linear or branched, but it is preferably linear having two terminal organo groups on each silicon which are reactive with isocyanates. The organo groups may be the same or different. The organo groups may be alkyl having from 1 to 8 carbon atoms, 3,3,3-trifluoropropyl; phenyl; triorganosiloxy (i.e., -OSiR$_3$ wherein R may be an alkyl group with from 1 to 6 carbon atoms) or alkenyl. Most preferably, the polyorganosiloxane is a polydimethylsiloxane because of its commercial availability.

When an amino-functional polyorganosiloxane is reacted with a diisocyanate, a silicone-urea copolymer results. Exemplary amino-functional groups reactive with isocyanate which may be bonded to a silicon on the polyorganosiloxane have the general formula HN(R')R"-.

When a carbinol-functional polyorganosiloxane is reacted with a diisocyanate, a silicone-urethane results. Exemplary carbinol-functional groups reactive with isocyanate which may be bonded to a silicon on the polyorganosiloxane have the general formula HOR'-.

Exemplary mercapto-functional groups reactive with isocyanate which may be bonded to a silicon on the polyorganosiloxane have the general formula HSR'-.

In the above general formulae, R' is a monovalent hydrocarbon radical and R" represents an alkylene radical. Each of the R' and R" radicals may be the same or different.

Exemplary epoxy-functional groups reactive with isocyanate are epoxies bonded to a divalent organic radical which, in turn, are bondable to a silicon on the polyorganosiloxane. The organic radical may be, among other things, an alkylene radical or an alkylene ether radical.

Methods of preparing reactive polyorganosiloxanes and of copolymerizing these polymers with diisocyanates and other organic monomers are known in the art and do not form part of this invention [see, for example, US-A-4,631,629; US-A-4,840,796; US-A-4,951,657; and US-A-5,008,115 and also the article entitled "Segmented Organosiloxane Copolymers", Polymer, Vol. 25, pp 1807-1816.

In one method of preparing the thermoplastic copolymers, the reactive polyorganosiloxane and the organic diisocyanate are mixed together to form a mixture. This mixture is then heated, in the presence of a suitable catalyst if needed, to cause a reaction between the polyorganosiloxane and the diisocyanate to occur. The reaction is typically run with a slight excess of either the polyorganosiloxane or the diisocyanate, preferably, with a slight excess of the diisocyanate, to react with any water present in the mixture. A typical molar ratio of reactive polyorganosiloxane to diisocyanate used in the reaction is 0.95:1.05. The hard segment of the thermoplastic copolymer may optionally include a chain extender. After extender addition, the reaction mixture is heated continuously until substantially all of the diisocyanate is reacted, which typically takes an additional 2 to 16 hours. The reaction is preferably conducted under an inert atmosphere such as nitrogen while using as the reaction medium, one or more organic solvents, e.g., toluene, tetrahydrofuran, dimethylformamide or mixtures thereof, which will dissolve the reactants and the resulting thermoplastic copolymer.

The compositions of our invention may optionally contain viscosity reducing agents (such as trimethyl-endblocked polydimethylsiloxane), drugs, excipients, solvents and the like. Optionally, the PSA compositions of this invention may include a minor amount of filler, such as an extending or reinforcing filler. It is usually desired that the filler be present in an amount of less than 5 weight %, based on the total weight of the silicate resin and silicone fluid. Higher quantities of filler often cause the silicone PSA to lose tack and adhesiveness and to increase in viscosity, making it more difficult to coat the PSA onto a substrate.

The silicone PSA compositions of this invention may be made by mixing the components in any order. One way is by heating a blend of the silicate resin and the silicone fluid to the melting temperature of the thermoplastic copolymer, and then slowly adding the thermoplastic copolymer to the heated blend. Another way is by (a) solvating a blend of the silicate resin and silicone fluid with a suitable solvent, such as trichlorofluoromethane, hexane, toluene, xylene or ethylacetate, (b) blending the thermoplastic copolymer into the solvated blend, and (c) then evaporating the solvent from the blend.

Our PSA compositions will adhere to many substrates, such as paper, cloth, glass cloth, silicone rubber, polyethylene, polyethylene terephthalate, polytetrafluoroethylene, glass, wood, metals and animal skin. Therefore, there are many uses for our compositions.

These PSA compositions may also be coated onto a substrate by hot-melt coating techniques or by applying the compositions in a solvent and subsequently evaporating the solvent. To apply our PSA compositions to a substrate, the application may be accomplished by using any conventional means, such as, e.g., roller coating, dip coating, extrusion, knife coating or spray coating.

When using hot-melt coating techniques, the method typically comprises the steps of (a) heating the PSA composition to a coatable temperature above 25°C. (typically above 100°C. and preferably above 150°C.), (b) coating the heated composition on the substrate, and (c) cooling the coated composition until it is in a generally non-flowing state. The coating temperatures should be low enough for decomposition of the composition not to occur. Lower temperatures may result in coatable viscosities depending on the coating equipment used, the desired end product and the composition of the PSA composition.

Optionally, after coating, the compositions may be cured. When the composition is to be cured, the composition may further contain a curing catalyst. The process of crosslinking silicone PSAs is known in the art, [see, for example, "Silicone Pressure - Sensitive Adhesives" by D.F. Merrill in the Handbook Of Pressure - Sensitive Adhesive Technology, edited by D. Satas (Van Nostrand Reinhold, Florence, Kentucky, 1982), pages 344-352, and "Formulating Silicone Pressure Sensitive Adhesives For Application Performances" by L.A. Sobieski in Making It Stick in '86 Advances In Pressure - Sensitive Tape Technology, seminar proceedings (Pressure Sensitive Tape Council, Deerfield, Illinois, 1986), pages 1-5.

The PSA compositions of this invention are especially suitable for assisting in delivering a bioactive agent, such as a drug, to a bioactive-agent accepting substrate, such as a patient's skin. The PSA composition of our invention may be employed in at least three modes of bioactive agent delivery. One mode is to incorporate the bioactive agent into the PSA composition, which is thereafter attached to the substrate to commence delivery. The second mode of delivery is to attach a membrane of the PSA composition to a substrate and to contact a reservoir or matrix, including a bioactive agent, with the attached membrane. The bioactive agent may then pass from the reservoir or matrix through the attached membrane to the substrate for absorption. The third mode of delivery is accomplished by applying the PSA to the perimeter of a delivery device having a bioactive agent-containing matrix in the center thereof. The delivery device is then attached to the substrate and the bioactive agent-containing matrix contacts the substrate directly.

The following examples illustrate the claimed invention. In the following examples, all parts and percentages are by weight unless otherwise specified.

The "NVC" (Non-volatile Content) value of a resin was determined by mixing 1.5 g of the resin with 0.75 g. of a 100 mm$^2$/s (cs.) viscosity, trimethylsiloxy-endblocked polydimethylsiloxane (PDMS) fluid in an aluminium foil dish, 60 mm in diameter and 15 mm deep, and by heating the sample for 2 hours at 150°C. in an air-circulating oven. The heated sample was then cooled to room temperature and reweighed to determine the weight of the non-volatile material (w) . The NVC, in percent, is equal to 100 x w/l.5.

Resin A-l was a xylene solution of a silicate resin prepared from 45 parts of sodium silicate (41.6° Bé) and 20 parts of $(CH_3)_3SiCl$ produced according to US-A 2,676,182, which contained $(CH_3)_3SiO_{1/2}$ units and $SiO_{4/2}$ units in a ratio of approximately 0.75:1.0, and had an NVC value of 69-71%, an acid number of 0.3 to 1.4, a viscosity of 10-14 mPa·s (centipoise) at 25°C. at 60% NVC in xylene and a silicon-bonded hydroxyl content of 2.5 weight percent based on 100% NVC.

Resin A-2 was devolatilized Resin A-l (100% NVC).

PDMS Fluid A was an homogeneous mixture of an hydroxyl-endblocked polydimethylsiloxane having a number average molecular weight of approximately 40,000 and minor amounts of cyclic polydimethylsiloxane having degrees of polymerization between 4 and 30. The mixture had a viscosity between 12,000 and 15,000 mPa·s (centipoise) as measured using a Brookfield Viscometer Model HAF with spindle #3 at 10 RPMs.

PSA "A" was prepared by homogeneously mixing 55 parts by weight of Resin A-2 and 45 parts by weight of PDMS Fluid A and thereafter solvating them in xylene in an amount forming a 70% xylene solution. The mixture was then heated to 100°C. and anhydrous ammonia was passed through the mixture at a rate of 5.0 ml/min/g (11 ml/min/lb) of non-volatile component of the mixture for 2 hours. To endcap the mixture, hexamethyldi-silazane was admixed at a 3:1 mole ratio of endblocking triorganosilyl to total silicon-bonded hydroxyl radicals present in the silicate and polydimethylsiloxane, and the mixture was then allowed to react for 3 hours at 95-100°C. Next, the mixture was heated to 140°C. and maintained at 140°C. under reflux conditions for 3 hours to remove water of condensation. The mixture was then stripped to greater than 90% NVC.

PSA "B" was a PSA composition prepared by homogeneously mixing 60 parts of Resin A-l, 40 parts of PDMS Fluid A and a portion of 2.4 parts of ammonium carbonate, heating the mixture to 100°C. and maintaining the temperature at 100°C. for 1 hour. Then, the remaining portion of the 2.4 parts ammonium carbonate was added to the mixture and mixing was continued for another hour at 100°C. The mixture was then stripped for 16 hours at 100°C. to remove the volatile components. PSA "B" cooled to room temperature had (l) a specific gravity of 1.085 - 1.115, (2) an NVC value of at least 98.8%, where NVC is as defined above, except that a 1 g. sample was used and the temperature of the oven was 177°C., (3) a plasticity of 3.8-5.1 mm (150-200 x $10^{-3}$ inches) as measured after a 24-hour rest and after force was applied to a 2-gram specimen for 3 minutes +/- 5 seconds using ASTM D926, and (4), when dispersed in trichlorotrifluoroethane to an NVC value of 18.5%, the adhesive peel measured at least 1600 g.

PSA "C" was prepared by the same procedure as that used for PSA "B except for the levels of Resin A-l and PDMS Fluid A used. For making PSA "C", 55 parts of Resin A-l and 45 parts of PDMS Fluid A were used.

PSA "D" was prepared by homogeneously mixing 26.74 parts of an hydroxy-endblocked polydimethylsiloxane gum having a plasticity between 1.2 and 1.5 mm (47 and 60 mils), 30.14 parts Resin A-2, 39.58 parts xylene, 3.40 parts isopropanol and 0.14 part of a mixture consisting of 9% tetramethylguanidine, 9% 2-ethyl hexoic acid and 82% xylene. The plasticity of the gum was measured at room temperature and after force was applied to a 4.2-gram specimen for 3 minutes +/- 5 seconds using ASTM D926. The homogeneous mixture was then stripped to remove the volatile components.

SILICONE UREA "A" was prepared by reacting hydrogenated methylene diisocyanate with a linear polydimethylsiloxane having a degree of polymerization of 100 and an N-methylaminoisobutyl functionality on each end. The reaction was completed using 1.05 moles of the diisocyanate per 0.95 mole of the amino-functional polydimethylsiloxane.

SILICONE UREA "B" was prepared by the same procedure as that used for SILICONE UREA "A", except that the degree of polymerization of the polydimethylsiloxane was 200.

SILICONE UREA "C" was prepared by the same procedure as that used for SILICONE UREA "A", except that the degree of polymerization of the polydimethylsiloxane was 300.

Tapes were prepared using the silicone PSA compositions of the following examples to measure adhesion and release values. The compositions were cast to an 0.05 mm (2-mil) thickness onto 25.4 mm (one-inch) wide strips of "SCOTCH-PAK"™ 1022 Release Liner, a polyester film coated with a release coating, the release liner being available from the 3M Company, St. Paul, Minnesota, U.S.A. After coating, a 25.4 mm (one-inch) wide strip of MYLAR™ polyester film was caused to adhere to each cast sample with a 2.0 kg. (4.5 lb.) roller.

Release values were obtained by stripping the tape from the "SCOTCH-PAK"™ 1022 Release Liner at a rate of 1.0 m/minute (40 inches/minute) and at an angle of 180° while attached to a tensile testing machine, with the results being expressed in grams per centimeter. An average value over the entire length of the liner was recorded. It is preferred that the release values be from 0.5 to 50 g/cm.

The tapes (the PSA composition on MYLART™) were each adhered to a stainless steel panel with a 2.0 kg (4.5 lb.) roller and allowed to rest for 15 minutes. The adhesion measurements were obtained by stripping each tape from the panel at a rate of 30.5 cm/minute (12 inches/minute) and at an angle of 180° while attached to a tensile testing machine, with the results expressed in grams per centimeter. It is preferred that the adhesion values be from 100 to 2000 g/cm.

Tack generally correlates with the adhesive's ability to stick, but is a difficult property to quantify. Tack was measured on the compositions in the following examples using a "POLYKEN"™ Probe Tack Tester, Series 400, made by Testing Machines, Inc., Amityville, NY, U.S.A. The speed of the probe was controlled to 1.0 cm/sec. and the dwell time of the probe was 0.5 second. It is preferred that the tack values be from 50 to 800 g.

Cold flow was measured by (a) rolling, into a ball, a piece of the PSA composition which weighs, in grams, twice its specific gravity, (b) pressure adhering the ball to a papered surface inclined to 30°, and (c) measuring the distance the ball moves after 7 days of being placed on the inclined papered surface at room temperature. The paper used on the inclined surface was manila folder paper #2-153LK-3 from Smead, Inc., Hastings, Minnesota, U.S.A. An additive to a PSA is considered significantly to improve cold flow if the cold flow with the additive is 95% or less than the cold flow of the PSA without the additive.

## Examples 1A-3B

In Examples 1A and 1B, 5.5 parts by weight of a silicone urea copolymer were blended with 94.5 parts by weight of PSA "A". In Example 1A, SILICONE UREA A was used and in Example 1B, SILICONE UREA "C" was used.

In Examples 2A-2C, 5.5 parts by weight of a silicone urea copolymer were blended with 94.5 parts by weight of PSA "C". In Example 2A, SILICONE UREA "A" was used, in Example 2B, SILICONE UREA "B" was used and in Example 2C, SILICONE UREA "C" was used.

In Examples 3A and 3B, 5.5 parts by weight of a silicone urea copolymer were blended with 94.5 parts by weight of PSA "D". In Example 3A, SILICONE UREA "B" was used and in Example 3B, SILICONE UREA "C" was used.

Cold flow, release, adhesion and tack values were determined on the blends and the values are listed in Table I together with the thickness of the tape used during the measurements. Values for PSA "A" without an additive are provided as Example C-1 (comparative example). Values for PSA "C" without an additive are provided as Example C-2. Values for PSA "D" without an additive are provided as Example C-3.

Table

| Example # | Cold Flow (cm) | Thickness (µm) | Release (g/cm) | Adhesion (g/cm) | Tack (g) |
|---|---|---|---|---|---|
| IA | 1.8 | 61 | 165.0 | 520.0 | 558 |
| IB | 2.0 | 53 | 48.0 | 319.0 | 601 |
| C-I | 2.2 | 56 | 6.0 | 597.0 | 237 |
| 2A | 1.0 | 58 | 33.0 | 562.0 | 363 |
| 2B | 2.7 | 56 | 396.0 | 370.0 | 820 |
| 2C | 1.4 | 56 | 12.0 | 627.0 | 641 |
| C-2 | 4.5 | 58 | 18.0 | 613.0 | 727 |
| 3A | 1.4 | 53 | 7.0 | 173.0 | 72 |
| 3B | 1.5 | 56 | 155.0 | 491.0 | 864 |
| C-3 | 1.9 | 51 | 21.0 | 549.0 | 542 |

## Examples 4A-4H

In Examples 4A-4H, SILICONE UREA "A" was blended with PSA "B" and a linear trimethyl-endblocked polydimethylsiloxane (PDMS) fluid having a viscosity of 100 mm$^2$/s (cs.) at 25°C. Table II provides the compositions in parts by weight of the blends for Examples 4A-4H.

Table II

| Example # | SILICONE UREA "A" | PSA "B" | PDMS |
|---|---:|---|---:|
| 4A | 5 | 94 | 1 |
| 4B | 5 | 90 | 5 |
| 4C | 5 | 85 | 10 |
| 4D | 5 | 80 | 15 |
| 4E | 5 | 75 | 20 |
| 4F | 10 | 70 | 20 |
| 4G | 15 | 65 | 20 |
| 4H | 20 | 60 | 20 |

Cold flow, release, adhesion and tack values were determined on the blends and the values are listed in Table III together with the thickness of the tape used during the measurements.

Table III

| Example # | Cold Flow (cm) | Thickness ($\mu$ms) | Release (g/cm) | Adhesion (g/cm) | Tack (g) |
|---|---|---|---|---|---|
| 4A | O | 61 | 2.0 | 536.0 | 124 |
| 4B | O | 61 | 6.0 | 426.0 | 149 |
| 4C | O | 61 | 11.0 | 311.0 | 215 |
| 4D | O | 56 | 11.0 | 198.0 | 349 |
| 4E | O | 58 | 15.0 | 112.0 | 486 |
| 4F | O | ND* | ND | ND | ND |
| 4G | O | ND | ND | ND | ND |
| 4H | O | ND | ND | ND | ND |

*Not determined

Examples 5A-5K

In Examples 5A-5K, SILICONE UREA "A" was blended with PSA "C" and a linear trimethyl-endblocked polydimethylsiloxane (PDMS) fluid having a viscosity of 100 mm$^2$/s (cs.) at 25°C. Table IV provides the compositions in parts by weight of the blends for Examples 5A-5K.

Table IV

| Example # | SILICONE UREA "A" | PSA "C" | PDMS |
|---|---|---|---|
| 5A | 5 | 94 | 1 |
| 5B | 5 | 90 | 5 |
| 5C | 5 | 85 | 10 |
| 5D | 10 | 80 | 10 |
| 5E | 15 | 75 | 10 |
| 5F | 20 | 70 | 10 |
| 5G | 5 | 80 | 15 |
| 5H | 5 | 75 | 20 |
| 5I | 10 | 70 | 20 |
| 5J | 15 | 65 | 20 |
| 5K | 20 | 60 | 20 |

Cold flow, release, adhesion and tack values were determined on the blends and the values are listed in Table V together with the thickness of the tape used during the measurements.

Table V

| Example # | Cold Flow (cm) | Thickness (μms) | Release (g/cm) | Adhesion (g/cm) | Tack (g) |
|---|---|---|---|---|---|
| 5A | 2.7 | 56 | 36.0 | 688.0 | 895 |
| 5B | 4.1 | 56 | 52.0 | 668.0 | 824 |
| 5C | 5.8 | 56 | 121.0 | 428.0 | 584 |
| 5D | 3.5 | 61 | 216.0 | 256.0 | 472 |
| 5E | 3.9 | 58 | 302.0 | 160.0 | 169 |
| 5F | 3.8 | 53 | 381.0 | 137.0 | 446 |
| 5G | 9.3 | 56 | 214.0 | 206.0 | 408 |
| 5H | 14.4 | 56 | 161.0 | 67.0 | 186 |
| 5I | 6.8 | 56 | 157.0 | 56.0 | 212 |
| 5J | 5.6 | 56 | 173.0 | 70.0 | 85 |
| 5K | 5.8 | 56 | 168.0 | 71.0 | 96 |

**Claims**

1. A pressure sensitive adhesive composition, comprising a mixture of:

from 75 to 99 weight percent of (A) a silicate resin and (B) a silicone fluid, wherein said silicate resin and silicone fluid are employed in a weight ratio of from 40:60 to 70:30 silicate resin to silicone fluid; and

from 1 to 25 weight percent of (C) a thermoplastic multi-segmented copolymer which is a product of the reaction between a diisocyanate and a reactive polyorganosiloxane having two groups reactive with isocyanates,

said pressure sensitive adhesive composition exhibiting tackiness and producing adhesiveness upon the application of slight pressure thereto.

2. The composition of claim 1, wherein the silicate resin is a benzene-soluble resinous copolymer containing silicon-bonded hydroxyl radicals, and essentially consisting of triorganosiloxy units of the formula $R_3SiO_{1/2}$ and tetrafunctionalsiloxy units of the formula $SiO_{4/2}$, in a ratio of 0.6 to 0.9 triorganosiloxy units for each tetrafunctionalsiloxy unit present in the copolymer, wherein each R is a monovalent organic radical independently selected from hydrocarbon radicals of 1 to 6 carbon atoms.

3. The composition of claim 1, wherein the silicate resin is a cohydrolysis product of a trialkyl hydrolysable silane and an alkyl silicate, and wherein the cohydrolysis product contains a plurality of silicon-bonded hydroxy groups.

4. The composition of claim 1, wherein the thermoplastic multi-segmented copolymer comprises from 1 to 40 weight percent hard segments derived from reactants selected from organic diisocyanates, organic diols and organic diamines, and from 60 to 99 weight percent soft segments comprising from 15 to 99 weight percent, based on the weight of the thermoplastic multi-segmented copolymer, of polyorganosiloxane units and from 0 to 70 weight percent, based on the weight of the thermoplastic multi-segmented copolymer, of polyalkylene oxide units.

5. The composition of claim 1, wherein the degree of polymerization of the reactive polyorganosiloxane is from 10 to 300.

6. The composition of claim 1, wherein the reactive polyorganosiloxane is selected from aminofunctional polyorganosiloxanes, carbinol-functional polyorganosiloxanes, mercapto-functional polyorganosiloxanes and epoxy-functional polyorganosiloxanes.

7. The composition of claim 1, wherein the thermoplastic multi-segmented copolymer has a number average molecular weight of from 30,000 to 120,000.

8. The composition of claim 1, wherein said composition exhibits a cold flow of less than 95% of the cold flow of the same composition prepared without the thermoplastic multi-segmented copolymer, the cold flow being measured by (a) rolling, into a ball, a piece of the pressure sensitive adhesive composition which weighs, in grams, twice its specific gravity, (b) pressure adhering the ball to a papered surface inclined to 30°, and (c) measuring the distance the ball moves after 7 days of being placed on the inclined papered surface.

9. The composition as set forth in claim 1, wherein the adhesiveness is exhibited by an adhesion value of from 100 to 2000 g/cm measured by (a) preparing a tape by casting the pressure sensitive adhesive composition 0.05 mm (2-mils) thick onto a 25.4 mm (one-inch) wide strip of release liner and adhering a 25.4 mm (one-inch) wide strip of polyester film to the cast composition, using a 2.0 kg (4.5 pounds) roller, (b) stripping the release liner from the tape, (c) adhering the side of the tape having the pressure sensitive adhesive composition thereon to a stainless steel panel using a 2.0 kg (4.5-pound) roller, (d) allowing the tape to rest adhered to the stainless steel panel for 15 minutes, and (e) measuring the force required to strip the tape from the stainless steel panel at a rate of 30.5 cm/min (12 inches/minute) and at an angle of 180° using a tensile testing machine.

10. The composition of claim 1, wherein the tackiness- is exhibited by a tack value of from 50 to 800 grams, measured with a probe tack tester controlled at a speed of 1 cm/sec and a dwell time of 0.5 second.

11. The composition of claim 1, wherein the composition exhibits a release value of from 0.5 to 50 g/cm, measured by (a) preparing a tape by casting the pressure sensitive adhesive composition 0.05 mm (2-mils) thick onto a 25.4 mm (one-inch) wide strip of "SCOTCH- PAK"™ 1022 Release Liner and adhering a 25.4 mm (one-inch) wide strip of polyester film to the cast composition using a 2.0 kg (4.5 pound) roller and (b) measuring the force required to strip the Release Liner, from the tape at a rate of 1.0 m/min (40 inches/minute) and at an angle of 180° using a tensile testing machine.

EP 0 667 382 A1

European Patent Office

**EUROPEAN SEARCH REPORT**

Application Number

## DOCUMENTS CONSIDERED TO BE RELEVANT

EP 95300756.4

| Category | Citation of document with indication, where appropriate, of relevant passages | Relevant to claim | CLASSIFICATION OF THE APPLICATION (Int. Cl. 6) |
|---|---|---|---|
| A | EP - A - 0 524 775 (DOW CORNING CORPORATION) * Claims; Examples * | 1 | C 09 J 183/04 C 09 J 7/00 |
| A | US - A - 5 214 119 (LEIR et al.) * Claims; examples * | 1 | |

TECHNICAL FIELDS SEARCHED (Int. Cl.6)

C 09 J 183/00
C 09 J 7/00
C 09 J 175/00
C 08 G 77/00

The present search report has been drawn up for all claims

| Place of search | Date of completion of the search | Examiner |
|---|---|---|
| VIENNA | 18-05-1995 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

10